# EUROPEAN PATENT APPLICATION

(11) **EP 1 245 253 A2**
(43) Date of publication of application: **02.10.2002**
(21) Application number: 02252270.0
(22) Date of filing: 27.03.2002
(51) Int. Cl.: A63C 5/03

(54) **Sledge**

(30) Priority: 29.03.2001 GB 0107813
(71) Applicant: von Staufer, Andrew Hubert, Monmouth NP25 5AU (GB)
(72) Inventor: von Staufer, Andrew Hubert, Monmouth NP25 5AU (GB)
(74) Representative: Evans, Huw David Duncan

(57) **Abstract**

A sledge for use on snow comprises a first elongate ski 10, a second shorter ski 11 disposed at the front end of the first ski 10, and a steering column 12 coupled at its lower end to the second ski 11 and at its upper end to handle bars 13. The steering column 12 extends substantially normal to the plane of the second ski 11 and is mounted to the front end of the first ski 10 for rotation about its longitudinal axis.

In use a rider can stand on the upper surface of the first ski 10 and can steer the sledge by turning handle bars 13 to turn the second ski 11.

The sledge is simple in construction and yet enables inexperienced riders to turn and traverse on uneven terrain without the risks associated with conventional skis and snowboards.

## Description

This invention relates to a sledge and more particularly but not solely to a sledge for use on snow.

Skis and snowboards are well known devices which can be used by a person for travelling over snow. A disadvantage of skis and snowboards is that they require the person to use their knees for both steering and shock absorption whilst turning and traversing on uneven terrain. The strain on the knees in carrying out both of the above manoeuvres can be severe.

It takes a considerable amount of skill and practice to achieve consistent and accurate turns and over time, this can cause damage to the person's knee, hip and ankle joints, particularly over bumpy terrain. This discourages persons with back and joint problems to take up skiing or snowboarding. Furthermore, it is undesirable for children to ski or snowboard without professional supervision, owing to the damage which can be caused to their joints etc.

Steerable sledges are known which can help to alleviate the above-mentioned problems. However, most steerable sledges require a saddle and as such are unsuitable for use by a person suffering from a back problem. Furthermore, known steerable sledges can be difficult to manoeuvre, owing to the fact that it is difficult for the rider to shift their body weight to a great extent whilst in the sedentary position.

I have now devised a sledge which alleviates the above-mentioned problems.

In accordance with this invention, there is provided a sledge comprising a first elongate ski member, a second shorter ski member disposed at one end of the first ski member and a steering column coupled at one end to the second ski member and at its other end to handle bar means, the steering column extending substantially normal to the plane of the second ski member and being mounted to said end of the first ski member for rotation about its longitudinal axis, the first ski member comprising an upper surface which is adapted to provide a portion on which a rider can stand.

In use a rider stands on the surface of the first ski member and uses the handle bar means to turn the second ski member, in order to steer the sledge.

The sledge is simple in construction and yet enables riders to turn and traverse on uneven terrain without the above-mentioned risks associated with conventional skis and snowboards.

Preferably the first ski member comprises opposite longitudinal side edges which curve inwardly towards each other, intermediate opposite ends of the first ski member. The extent of the inward curvature or so-called sidecut determines the response to the initiation of a turn, with the greater the sidecut, the more instant the response.

Preferably the first ski member is curved along its longitudinal axis, such that a portion of the first ski member, intermediate at its opposite ends is normally out of contact with the surface of the snow.

Preferably the first ski member is formed of a resiliently flexible material, which is preferably laminated in order to provide strength. The development and finish of a turn prior to initiating another turn is a product of the flex of the first ski member. This flex has to be even longitudinally but with minimal tendency to twist about its longitudinal axis.

Preferably the ratio of the width of the second ski member to its length is small, so that it is broad and light enough to float over deep snow at speed, whilst reducing the tendency for it to twist about its longitudinal axis.

The longitudinally curved nature of the first ski member helps to facilitate shock absorption. However, the steering column may be connected to the end of the first ski member by means of shock absorption means, so as to help reduce the effects of shocks that are transmitted to the second ski member whilst travelling over uneven terrain.

The first ski member is preferably sufficiently flexible to enable it to flex in the opposite direction, once the turn has been initiated and its side edge engaged with the snow, thereby enabling the turn to be carved.

The ability to steer will allow much tighter turns than is possible with either skis or snowboards. An experienced rider will be able to alternately engage opposite side edges of the first ski member with the snow far more rapidly by throwing the steering column from side-to-side than is possible by weight-shifting on either skis or snowboards.

Turns may be initiated by turning the handle bars and by the rider transferring their weight longitudinally of the first ski member, rather than by dragging it into a turn with the knees, as is necessary with both skis and snowboards.

On flat or gentle up-hill gradients, the sledge may be propelled by placing one foot on the upper surface of the first ski member and by using the other foot to push along the ground.

Preferably the end of the first ski member to which the steering column is attached is curved upwardly away from the ground.

Preferably, the second ski member extends under the upwardly-curved end portion of the first ski member.

An embodiment of this invention will now be described by way of an example only and with reference to the accompanying drawings, in which:

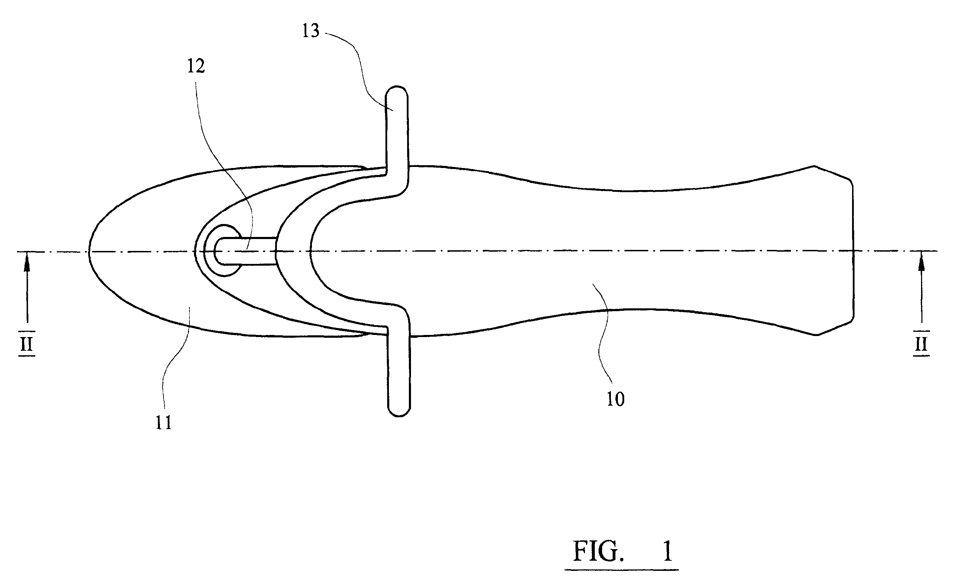

FIGURE 1 is a plan view of a sledge in accordance with this invention;

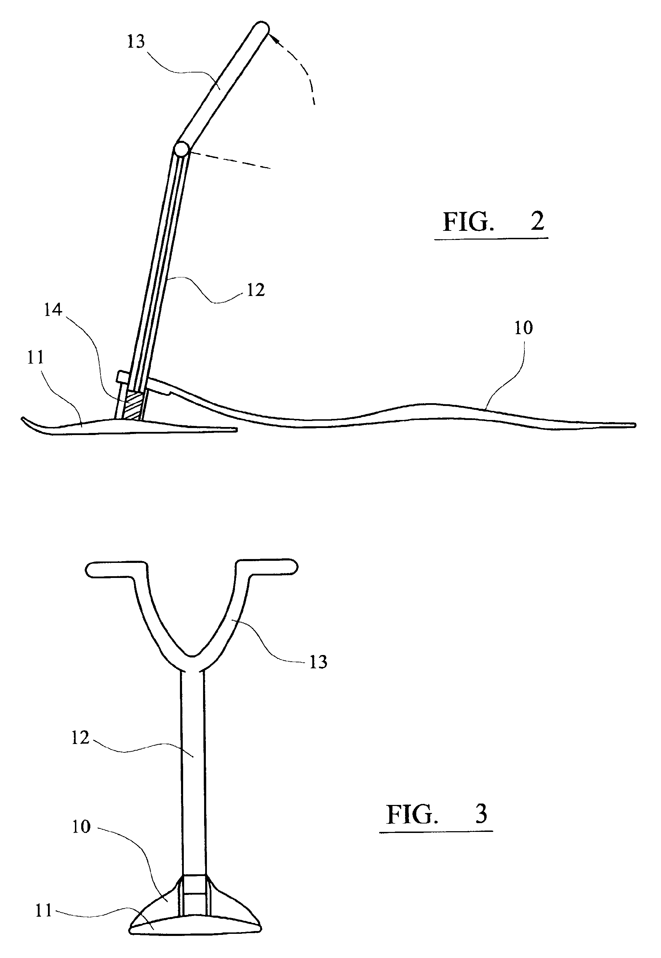

FIGURE 2 is a sectional view along the lines II-II of Figure 1; and
FIGURE 3 is a front view of the sledge of Figure 1.

Referring to the drawings, there is shown a sledge comprising an elongate first ski member 10 formed of a resiliently flexible material and having a front end portion which is curved upwardly. The sledge also comprises a second ski member 11, which is shorter than the first ski member 10 which also comprises an upwardly-curved portion at its front end.

An elongate steering column 12 extends upwardly from the central portion of the second ski member 11. The upper end of the steering column 12 is connected to a pair of handle bars 13. The steering column 12 extends through an aperture formed in the raised front end of the first ski member 10 and is connected thereto by means of a bearing (not shown) which permits the steering column 12 about its longitudinal axis. The steering column 12 may comprise a shock-absorber 14 at its lower end, in order to provide a certain amount of resilient movement between the first and second ski members 10, 11, relative to the longitudinal axis of the steering column 12. Means (not shown) may be provided for adjusting the degree of resilience of the shock absorber.

The first ski member 12 is curved along its longitudinal axis to provide a central raised portion. The opposite longitudinal side edges of the first ski member 10 curve inwardly towards each other intermediate opposite ends of the ski member, so that the width of the first ski member 10 is less intermediate its opposite ends than it is at its opposite ends. Preferably at least the opposite longitudinal side edges of the first ski member are formed of metal. The ski members 10, 11 themselves may be formed of a metal alloy with a composite core, carbon fibre reinforced plastic, glass reinforced plastic or any other laminated or strengthened material which exhibits sufficient resilient flexibility but which is strong.

In use, a rider stands on the upper surface of the first ski portion 10 and holds onto the handle bars 13, which can be turned to turn the second ski member 12. Turning of the second ski member 12 causes the sledge to turn but in addition to this the rider can shift their weight for an aft, in order to vary the degree of the turn.

The overall sidecut of the sledge is a combination of the sidecuts of the first and second ski members 10, 12. It will thus be appreciated that the overall sidecut is variable by turning the second ski member 11. When travelling in a straight line, the overall sidecut is shallow and this helps the sledge to travel stably in a straight line. However, increased turning of the handle bars causes the overall sidecut to become deeper and this helps to make the sledge turn more instantly.

The steel edge of the first ski member allows safe traversing and turning on icy or hard-packed snow. The rider's feet are not normally attached to the first ski member 10, in order to allow the rider to transfer their weight longitudinally of the first ski member. This also helps to avoid injuries during accidents, since the rider will separate from the sledge.

It will be appreciated that a sledge in accordance with this invention is extremely simple in construction but yet provides an extremely responsive and manoeuvrable recreational device for travelling across snow.

It is envisaged that the sledge could be used on other surfaces such as on grass or on water. A motor may be provided on the sledge for self-propulsion. The motor may drive wheels or a track which engages the ground.

## Claims

1. A sledge comprising a first elongate ski member, a second shorter ski member disposed at one end of the first ski member and a steering column coupled at one end to the second ski member and at its other end to handle bar means, the steering column extending substantially normal to the plane of the second ski member and being mounted to said end of the first ski member for rotation about its longitudinal axis, the first ski member comprising an upper surface which is adapted to provide a portion on which a rider can stand.

2. A sledge as claimed in claim 1, in which the first ski member comprises opposite longitudinal side edges which curve inwardly towards each other, intermediate opposite ends of the first ski member.

3. A sledge as claimed in claims 1 or 2, in which the first ski member is curved along its longitudinal axis, such that a portion of the first ski member, intermediate at its opposite ends is normally out of contact with the surface of the snow.

4. A sledge as claimed in any preceding claim, in which the first ski member is formed of a resiliently flexible material.

5. A sledge as claimed in claim 4, in which the first ski member is formed of a resiliently flexible laminated material. in order to provide strength.

6. A sledge as claimed in any preceding claim, in which the ratio of the width of the second ski member to its length is small.

7. A sledge as claimed in any preceding claim, in which the steering column is connected to the end of the first ski member by means of shock absorption means.

8. A sledge as claimed in any preceding claim, in which the end of the first ski member to which the steering column is attached is curved upwardly away from the ground.

9. A sledge as claimed in claim 8, in which the second ski member extends under the upwardly-curved end portion of the first ski member.
